# EUROPÄISCHE PATENTANMELDUNG

(11) **EP 1 881 268 A1**
(43) Veröffentlichungstag der Anmeldung: **23.01.2008**
(21) Anmeldenummer: 07012460.7
(22) Anmeldetag: 26.06.2007
(51) Int. Cl.: F21V 21/08

(54) **Befestigungsvorrichtung zur Befestigung von Anbauteilen**

(30) Priorität: 27.06.2006 DE 102006029826
(71) Anmelder: POLYCADFORM e.K., 35216 Breidenstein (DE)
(72) Erfinder: Henkel, Thomas, 35216 Breidenstein (DE)
(74) Vertreter: Tappe, Hartmut

(57) **Zusammenfassung**

Die Erfindung betrifft eine Befestigungseinrichtung für Anbauteile (20), insbesondere Leuchten, mit zumindest zwei, an einem Gehäuse (21) des Anbauteils angeordneten Anschlusseinrichtungsaufnahmen (22, 23) zur Aufnahme einer ersten Anschlusseinrichtung und zumindest einer zweiten Anschlusseinrichtung, wobei die erste Anschlusseinrichtung als Haftverbindungseinrichtung (24) zur Ausbildung einer Oberflächenhaftkraft ausgebildet ist und die zweite Anschlusseinrichtung als räumlich positionierende Befestigungseinrichtung (27) ausgebildet ist.

## Beschreibung

Die Erfindung betrifft eine Befestigungsvorrichtung zur Befestigung von Anbauteilen, insbesondere Leuchten, mit zumindest zwei, an einem Gehäuse des Anbauteils angeordneten Anschlusseinrichtungsaufnahmen zur Aufnahme einer ersten Anschlusseinrichtung und zumindest einer zweiten Anschlusseinrichtung, wobei die erste Anschlusseinrichtung als Haftverbindungseinrichtung zur Ausbildung einer Oberfläcbenhaftkraft ausgebildet ist, und die zweite Anschlusseinrichtung als räumlich positionierende Befestigungseinrichtung ausgebildet ist.

Das technische Gebiet der Erfindung betrifft insbesondere die Befestigung von Anbauteilen an technischen Einrichtungen, wie beispielsweise Leuchen, die zur Beleuchtung technischer Einrichtungen zum Einsatz kommen. Insbesondere werden Leuchten dieser Art in Schaltschränken, Gerätesehränken oder ähnlichen Schränken eingesetzt. Diese als Leuchten ausgebildeten Anbauteile haben regelmäßig eine kompakte Bauform und werden an horizontalen und an vertikalen Profilen oder an Schrankwandungen befestigt. Werden Profile als Befestigungsbasis verwendet, so sind diese häufig als Lochrasterprofil mit einem definierten Lochabstand ausgebildet. Die Montage dieser Leuchten soll in der Regel möglichst schnell und einfach erfolgen, und die Montagetechnik muss leicht an die Befestigungserfordernisse der jeweiligen technischen Gegebenheiten anpassbar sein.

Aus dem Stand der Technik sind in Verbindung mit als Anbauteilen ausgebildeten Leuchten eine Reihe von Befestigungstechniken bekannt, wie z.B. Schraubverbindungen, magnetische Halteverbindungen, Steck-oder Rastverbindungen. Oftmals ist jedoch die Befestigungstechnik einer derartigen Leuchte auf einen bestimmten Anwendungsfall abgestimmt oder umfasst nur eine Art von Befestigungselementen. Auch sind Leuchten bekannt, die über Anschlusseinrichtungen verfügen, in die verschiedenartige Befestigungselemente eingesetzt werden können. Jedoch müssen die verschiedenen Befestigungselemente der Leuchte ergänzend beigefügt werden, damit bei der Montage das passende Befestigungselement ausgewählt werden kann. Auch ist die gleichzeitige Verwendung zweier unterschiedlicher Befestigungstechniken nicht möglich, da in die Anschlusseinrichtung der Leuchte immer nur ein Befestigungselement eingesetzt werden kann.

Aufgabe der Erfindung ist es, eine Befestigungsvorrichtung vorzuschlagen, welche über verschiedene Befestigungselemente verfügt, die einfach in eine Befestigungskonfiguration überführt werden können, ohne dass diese Befestigungselemente separat mitgeführt und ausgewechselt werden müssten. Weiter soll eine Montagehilfe, welche die Ausrichtung des Anbauteils auf einer Befestigungsbasis zulässt, eine vereinfachte und schnelle Montage des Anbauteils ermöglichen.

Diese Aufgabe wird durch eine Befestigungsvorrichtung mit den Merkmalen des Anspruchs 1 gelöst.

Die erfindungsgemäße Befestigungsvorrichtung ist an einem Gehäuse ausgebildet, welches über zumindest zwei Anschlusseinrichtungsaufnahmen zur Aufnahme einer ersten Anschlusseinrichtung und zumindest einer zweiten Anschlusseinrichtung verfügt. Erfindungsgemäß ist die erste Anschlusseinrichtung als Haftverbindungseinrichtung zur Ausbildung einer Oberflächenhaftkraft ausgebildet, welche einerseits zur Fixierung des Anbauteils auf einer Befestigungsbasis dient und andererseits eine Veränderung der Positionierung des Anbauteils in einer Befestigungsebenc ermöglicht. Die vorgenannte Anschlusseinrichtung ist somit als Montagehilfe nutzbar, um beispielsweise das Anbauteil mit der Befestigungsbasis zu verschrauben, ohne dass das Anbauteil bei der Verschraubung von Hand auf der Befestigungsbasis festgehalten werden müsste. Weiter ist erfindungsgemäß die zweite Anschlusseinrichtung als räumlich positionierende Befestigungseinrichtung ausgebildet. Das Anbauteil ist so dauerhaft in einer definierten Raumposition positionierbar.

In einer besonders bevorzugten Ausführungsform der Befestigungsvorrichtung können jeweils am axialen Ende des Gehäuses zwei Anschlusseinrichtungsaufnahmen ausgebildet sein, wobei jeweils eine Anschlusseinrichtung als Montagehilfe nutzbar ist und jeweils eine weitere Anschlusseinrichtung mit einer Befestigungsbasis verbindbar ist.

In einer weiteren vorteilhaften Ausführungsform kann die räumlich positionierende Befestigungseinrichtung des Anbauteils zwei jeweils räumlich positionierende Befestigungselemente aufweisen. Diese beiden räumlich positionierenden Befestigungselemente können für den Anschluss des Anbauteils an verschiedene Befestigungsbasen, wie z.B. einem Lochrasterprofil dienen. Auch kann das Anbauteil in verschiedenen räumlichen Positionen relativ zur Befestigungsbasis montiert werden.

Die räumlich positionierende Befestigungseinrichtung kann auch Befestigungselemente aufweisen, welche als Befestigungslaschen mit einer Befestigungsbohrung zur Herstellung einer Bolzenverbindung mit einer Befestigungsbasis ausgebildet sind. Mit derartigen Befestigungslaschen kann leicht eine Schraub-, Raststift- oder Nietverbindung mit einer Befestigungsbasis hergestellt werden.

Als besonders vorteilhaft erweist es sich, wenn die Befestigungselemente als Befestigungslaschen mit einem Befestigungsvorsprung zum Eingriff in eine Befestigungsbasis ausgebildet sind. Dies ermöglicht das Einsetzen oder Einrasten der Befestigungslaschen in Durchgangsöffnungen einer Befestigungsbasis und somit eine formschlüssige Befestigung des Anbauteils auf der Befestigungsbasis.

Zur Anpassung des Anbauteils auf eine Befestigungsbasis, wie z.B. einem Lochrasterprofil, können die Anschlusseinrichtungsaufnahmen zur Aufnahme einer Befestigungslasche eine Führungsaufnahme zur längsverschiebbaren Anordnung der Befestigungslasche aufweisen. Dies ermöglicht die Ausrichtung axial voneinander beabstandeter Befestigungslaschen auf einen vorgegebenen Lochabstand zur Verschraubung mit oder zum Eingriff in ein Lochrasterprofil. Auch kann in die Anschlusseinrichtungsaufnahmen eine Haftverbindungseinrichtung eingesetzt werden, die eine mit der Führungsaufnahme übereinstimmend ausgebildete Form aufweist.

Besonders vorteilhaft ist es, wenn die Führungsaufnahme mit einer Rastereinrichtung zur Relativpositionierung der Befestigungslasche versehen ist. Durch die Rastereinrichtung kann eine feste Einstellung zweier, axial voneinander beabstandeter Befestigungslaschen auf einen vorgegebenen Lochrasterabstand einer Befestigungsbasis erfolgen. Ebenso kann eine feste Einstellung eines Befestigungsvorsprunges auf einen vorgegebenen Lochrasterabstand erfolgen.

In einer besonders vorteilhaften Ausführungsform kann zumindest die Anschlusseinrichtungsaufnahme zur Aufnahme der Befestigungseinrichtung an einer schwenkbar am Gehäuse angeordneten Schwenkbasis angeordnet sein. Somit können Befestigungselemente der Befestigungseinrichtung in unterschiedliche Positionen verschwenkt werden. Dies ermöglicht insbesondere einen Wechsel der Befestigungselemente durch Verschwenken in eine Verwahr-, Montage- oder Endposition ohne dass die Befestigungselemente auszutauschen bzw. vom Gehäuse zu trennen wären. Somit kann die Befestigungseinrichtung einfach an unterschiedliche Befestigungserfoxdernisse angepasst werden.

Als besonders vorteilhaft erweist es sich, wenn das Gehäuse an seinem axialen Ende mit zumindest jeweils einer Schwenkbasis zum Verschwenken der Befestigungselemente in eine die äußeren Gehäuseabmessungen axial überragende Befestigungskonfiguration versehen ist. Das Gehäuse kann so, mit jeweils einer an der Schwenkbasis ausgebildeten Befestigungslasche, zwischen zwei parallel zueinander angeordneten Lochprofilen, wie beispielsweise in einem Schaltschrank mit 19 Zoll Geräteaufnahmen, angeordnet werden. Die Befestigungslaschen können derart verschwenkt werden, dass sie jeweils in eine Durchgangsöffnung im Lochrasterprofil eingreifen und durch Verschwenken in eine axiale Lage längs zum Gehäuse formschlüssig in die Durchgangsöffnungen der Lochrasterprofile einsetzbar sind. Das Anbauteil kann so zwischen zwei Lochrasterprofilen ohne zusätzliches Werkzeug montiert werden.

Ist die Schwenkbasis mit einer Rastereinrichtung zur Relativpositionierung der Befestigungselemente versehen, kann durch Einrasten der Schwenkbasis im Gehäuse eine Fixierung der Befestigungskonfiguration des Gehäuses, z.B. zwischen zwei Lochrasterprofilen, erreicht werden. Weiter erweist es sich als vorteilhaft, wenn die Schwenkbasis in drei verschiedene Positionen im Gehäuse einrastet. So kann die Schwenkbasis in einer Verwahrposition, in einer Montageposition und in einer Endposition fixiert werden. Dies erleichtert das Einsetzen des Gehäuses zwischen zwei Lochrasterprofilen wesentlich.

Die Haftverbindungseinrichtung der erfindungsgemäßen Befestigungsvorrichtung kann als Magnet ausgebildet sein. Dies ermöglicht die dauerhafte Befestigung des Gehäuses auf einer glatten Oberfläche, wie z.B eine Stahlblechwandung eines Schaltschrankes. Weiter kann die als Magnet ausgebildete Haftverbindungseinrichtung als Montagehilfe zur beweglichen Vormontage des Anbauteils auf einem Lochrasterprofil für eine abschließende Verschraubung genutzt werden.

In weiteren vorteilhaften Ausführungsformen der Befestigungsvorrichtung kann die Haftverbindungseinrichtung auch als Saugverbindung, wie z.B. durch einen Saugnapf, oder als Klebeverbindung ausgebildet sein.

Im Folgenden wird die Erfindung unter Bezugnahme auf die beigefügte Zeichnung näher erläutert.

Es zeigen:
- **Fig. 1:**: ein Leuchtengehäuse mit zwei Anschlusseinrichtungsaufnahmen;
- **Fig. 2-3:**: eine Anschlusseinrichtungsaufnahme zur schwenkbaren Anordnung an einem Leuchtengehäuse mit zwei Befestigungselementen;
- **Fig. 4-5:**: ein Leuchtengehäuse in einer ersten Befestigungskonfiguration;
- **Fig. 6-7:**: ein Leuchtengehäuse in einer zweiten Befestigungskonfiguration;
- **Fig. 8-10:**: ein Leuchtengehäuse in einer dritten Befestigungskonfiguration.

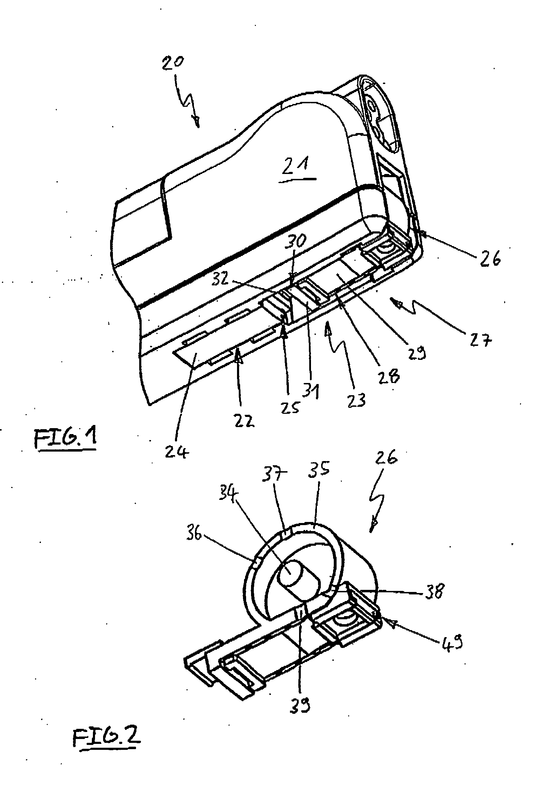

In **Fig. 1** ist ein als Leuchte 20 ausgebildetes Anbauteil mit einem Teilabschnitt eines Gehäuses 21, einer ersten Anschlusscinrichtungsaufnahme 22 und einer zweiten Anschlusseinrichtungsaufnahme 23 dargestellt. In die Anschlusseinrichtungsaufnahme 22 ist dabei eine als Magnet 24 ausgebildete Anschlusseinrichtung eingesetzt und in einer Führungsaufnahme 25 längsverschiebbar aufgenommen. Die Anschlusseinrichtungsaufnahme 23 ist an einer schwenkbar mit dem Gehäuse 21 verbundenen Schwenkbasis 26 angeordnet und als räumlich positionierende Befestigungseinrichtung 27 ausgebildet. Die Befestigungseinrichtung 27 weist ein erstes Befestigungselement 28, welches als Befestigungslasche 29 ausgebildet ist und ein zweites Befestigungselement 30, welches als Befestigungslasche 31 mit einem Befestigungsvorsprung 32 ausgebildet ist auf. In der dargestellten Verwahrposition sind die Befestigungselemente 28 und 30 der Anschlusseinrichtungsaufnahme 23 nicht unmittelbar für eine Montage auf einer hier nicht dargestellten Befestigungsbasis nutzbar. Demgegenüber kann der Magnet 24, der in der Anschlusseinrichtungsaufnahme 22 aufgenommen ist, zur Befestigung der Leuchte 20 auf einer Befestigungsbasis verwendet werden.

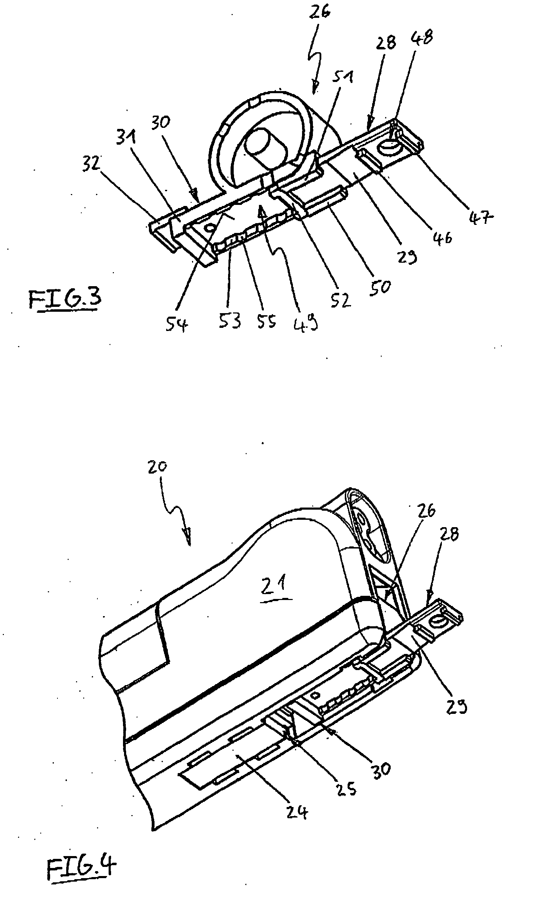

**Fig. 2** und **Fig. 3** zeigen die Schwenkbasis 26 an der eine Schwenkachse 34 ausgebildet ist, die in hier nicht dargestellte Ausnehmungen des Gehäuses 21 einsetzbar ist. Auf einem äußeren, weitestgehend ringförmigen Umfangskörper 35 der Schwenkbasis 26 sind an dessen Seitenfläche Rastausnehmungen 36, 37, 38 und 39 ausgebildet. Die Rastausnehmungen 36, 37, 38 und 39 greifen in eine hier nicht dargestellte Rastnase eines Gehäuses ein und ermöglichen somit eine Fixierung der Schwenkbasis 26 relativ zu einem Leuchtengehäuse in einer Verwahrposition, Montageposition und Endposition ohne die Verwendung von Werkzeug. Weiter weist die Schwenkbasis 26 das Befestigungselement 30 und das Befestigungselement 28 auf. Das Befestigungselement 30 weist die Befestigungslasche 31 mit dem Befestigungsvorsprung 32 zum Einsetzen in eine hier nicht dargestellte Durchgangsöffnung eines Lochrasterprofils auf. Das Befestigungselement 28 weist die Befestigungslasche 29 mit einem Befestigungsvorsprung 46, einem Stützsteg 47 und einer Durchgangsöffnung 48 auf. Die Befestigurigslasche 29 ist in eine Führungsaufnahme 49 längsverschiebbar eingesetzt und durch Führungsstege 50, 51 im Zusammenspiel mit einem Anschlag 52 gegen Herausfallen gesichert. Seitenflächen 53, 54 der Führungsaufnahme 49 sind mit einer Mehrzahl Rastausnehmungen 55 versehen, in die hier nicht sichtbare, an der Befestigungslasche 29 ausgebildete Rastnasen eingreifen. Die Befestigungslasche 29 ist somit in einer definierten Position relativ zum Gehäuse 21 fixierbar.

**Fig. 4** zeigt die in **Fig. 3** dargestellte Schwenkbasis 26 mit den vom Gehäuse 21 aufgenommen Befestigungselementen 30 und 28 in einer äußeren Position relativ zum Gehäuse 21 und dem in der Führungsaufnahme 25 eingesetzten Magnet 24.

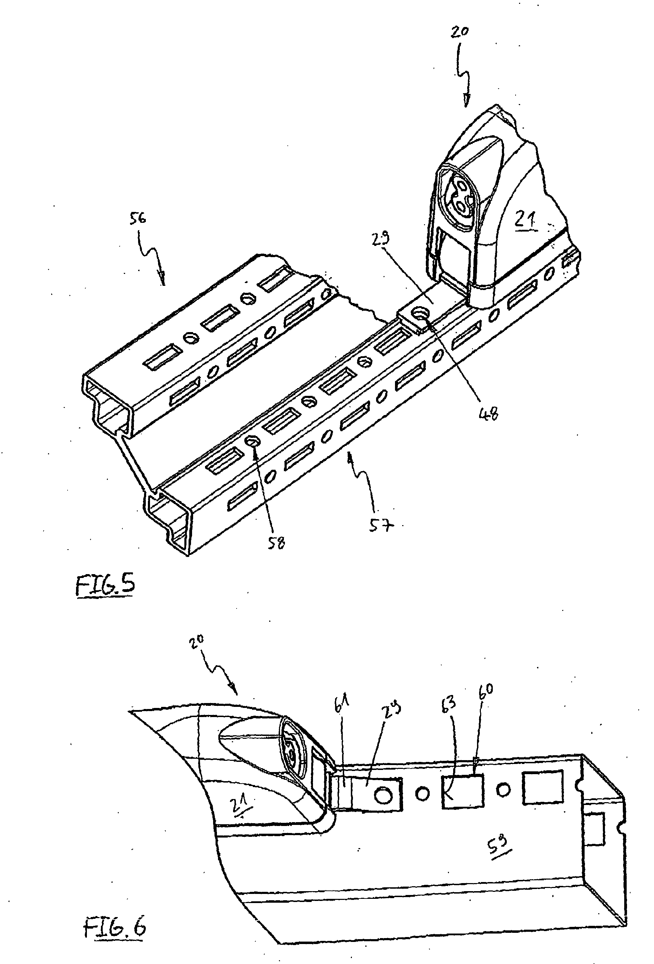

Die Zusammenschau von **Fig. 4** und **Fig. 5** verdeutlicht eine erste Möglichkeit der Befestigungskonfiguration der Leuchte 20 auf einem Lochrasterprofil 56. Am Lochrasterprofil 56 sind Profilabschnitte 57 mit einer Vielzahl von Durchgangsöffnungen 58 ausgebildet. Die Leuchte 20 ist über den Magnet 24 am Profilabschnitt 57 fixiert, derart, dass die Durchgangsöffnung 48 der Befestigungslasche 29 mit einer der Durchgangsöffnungen 58 des Profilabschnittes 57 fluchtet. Das Gehäuse 21 ist so über die Befestigungslasche 29 mit einer hier nicht näher dargestellten Bolzen-, Schrauben-, oder Raststiftverbindung mit dem Lochrasterprofil verbindbar. Die vom Magnet 24 ausgebildete Haftverbindung mit dem Profilabschnitt 57 ist bei der Montage des Gehäuses 21 zur übereinstimmenden Ausrichtung der Durchgangsöffnung 48 mit einer der Durchgangsöffnungen 58 nutzbar. Weiter ist die Befestigungslasche 29 durch die in **Fig. 3** gezeigte Rastereinrichtung auf unterschiedliche Längsabstände von Durchgangsöffnungen 58 im Profilabschnitt 57 anpassbar.

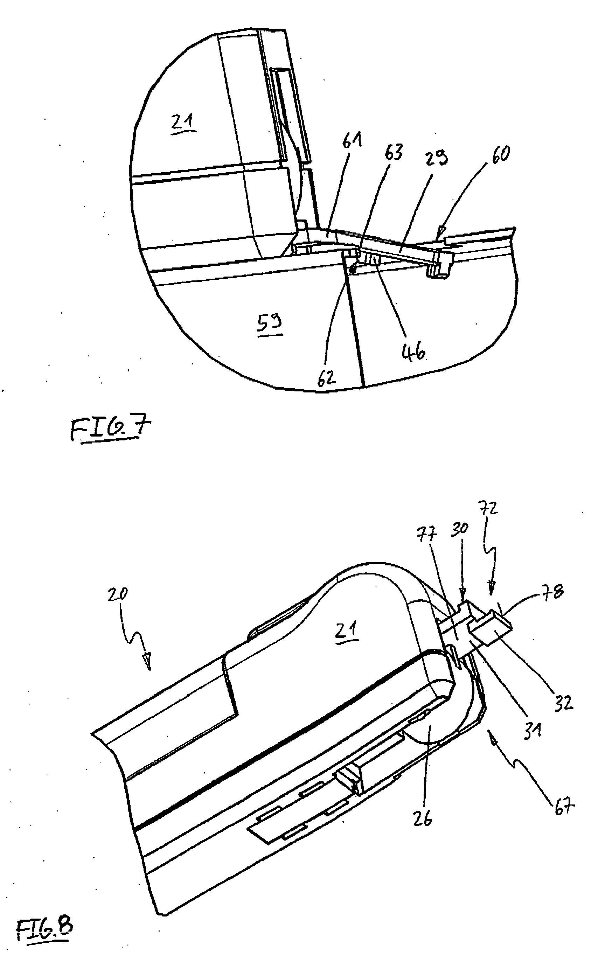

Die Zusammenschau aus **Fig. 6** und **Fig. 7** zeigt ein weiteres Ausführungsbeispiel einer Befestigungskonfiguration zwischen dem Gehäuse 21 der Leuchte 20 und einem Lochrasterprofil 59. Das Lochrasterprofil 59 ist mit einer Vielzahl von rechteckigen Durchgangsöffnungen 60 versehen, in die die Befestigungslasche 29 einsetzbar ist. Die Befestigungslasche 29 ist in einem Biegebereich 61 aus ihrer ebenen Erstreckung in eine, in die Durchgangsöffnung 60 eingreifende Montageposition abgewinkelt. Der Befestigungsvorsprung 46 der Befestigungslasche 29 greift mit einer daran ausgebildeten Rastnase 62 unter eine Kante 63 der Durchgangsöffnung 60. Die Befestigungslasche 29 rastet so vermittels der Rastnase 62 in der Durchgangsöffnung 60 ein und ermöglicht eine formschlüssige Verbindung der Leuchte 20 mit dem Lochrasterprofil 59.

Die Befestigung unterstützend, kann eine hier nicht dargestellte Haftverbindung von einem Magneten ausgebildet sein.

Eine Zusammenschau der **Fig. 8, 9** und **10** zeigt ein drittes Ausführungsbeispiel einer Befestigungskonfiguration der Leuchte 20 mit dem Gehäuse 21 und einem Lochrasterprofil 66. An einem, einem Gehäuseende 67 des Gehäuses 21 gegenüberliegenden, hier nicht dargestellten Gehäuseende, fügt sich ein zum Lochrasterprofil 66 parallel verlaufendes übereinstimmendes Lochrasterprofil an. Die Leuchte 20 ist somit im Zwischenraum zwischen den Lochrasterprofilen rechtwinklig zu den Lochrasterprofilen aufgenommen.

**Fig. 8** zeigt die im Gehäuse 21 eingesetzte Schwenkbasis 26 mit der Befestigungslasche 31 des Befestigungselementes 30, an der der Befestigungsvorsprung 32 ausgebildet ist. Das Befestigungselement 30 ist in der in der **Fig. 8** gezeigten Darstellung in einer äußeren Endposition 72.

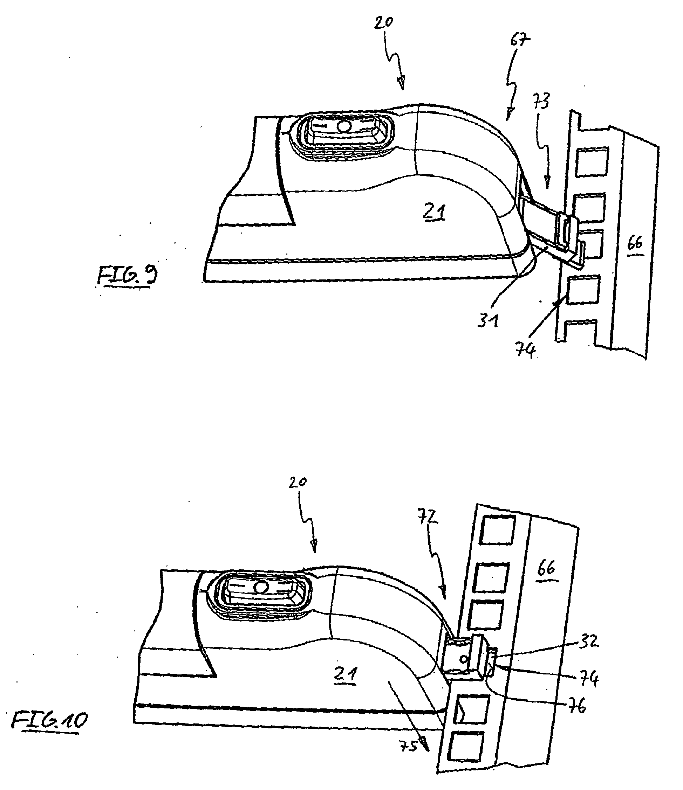

**Fig. 9** zeigt die Befestigungslasche 31 in einer Montageposition 73 vor Eingriff in eine rechteckige Durchgangsöffnung 74 des Lochrasterprofils 66. Eine Endposition der Leuchte 20 bzw. des Befestigungselementes 30 wird durch Einsetzen des Befestigungsvorsprunges 32 in die Durchgangsöffnung 74 und durch eine Bewegung der Leuchte 20 in Richtung des Pfeils 75, wie in **Fig. 10** dargestellt, erreicht. Die Schwenkbasis 26 rastet so durch eine hier nicht dargestellte Rasteinrichtung im Gehäuse 21 in der Endposition ein. Weiter greift der Befestigungsvorsprung 32 beim Einsetzen in die Durchgangsöffnung 74 hinter eine Kante 76 der Durchgangsöffnung 74 und verspannt so eine Unterseite 77 der Befestigungslasche 31 mit einer Oberseite 78 des Befestigungsvorsprunges 32 gegeneinander, was bei einem gleichzeitigen Einrasten der jeweiligen, an den Gehäuseenden 67 der Leuchte 20 aufgenommenen Schwenkbasen 26 zu einer formschlüssigen Befestigung der Leuchte 20 zwischen den Lochrasterprofilen 66 führt.

## Patentansprüche

1. Befestigungsvorrichtung zur Befestigung von Anbauteilen (20), insbesondere Leuchten, mit zumindest zwei, an einem Gehäuse (21) des Anbauteils angeordneten Anschlusseinrichtungsaufnahmen (22, 23) zur Aufnahme einer ersten Anschlusseinrichtung und zumindest einer zweiten Anschlusseinrichtung, wobei die erste Anschlusseinrichtung als Haftverbindungseinrichtung zur Ausbildung einer Oberflächenhaftkraft ausgebildet ist, und die zweite Anschlusseinrichtung als räumlich positionierende Befestigungseinrichtung (27) ausgebildet ist.

2. Befestigungsvorrichtung nach Anspruch, 1
**dadurch gekennzeichnet,**
**dass** die räumlich positionierende Befestigungseinrichtung (27) zwei jeweils räumlich positionierende Befestigungselemente (28, 30) aufweist.

3. Befestigungsvorrichtung nach Anspruch 2,
**dadurch gekennzeichnet,**
**dass** die Befestigungselemente als Befestigungslaschen (29, 31) mit einer Befestigungsbohrung (48) zur Herstellung einer Bolzenverbindung mit einer Befestigungsbasis ausgebildet sind.

4. Befestigungsvorrichtung nach Anspruch 2,
**dadurch gekennzeichnet,**
**dass** die Befestigungselemente als Befestigungslaschen (29, 31) mit einem Befestigungsvorsprung (32, 46) zum Eingriff in eine Befestigungsbasis ausgebildet sind.

5. Befestigungsvorrichtung nach einem der vorangehenden Ansprüche,
**dadurch gekennzeichnet,**
**dass** die Anschlusseinrichtungsaufnahmen zur Aufnahme einer Befestigungslasche eine Führungsaufnahme (49) zur längsverschiebbaren Anordnung der Befestigungslasche (29) aufweist.

6. Befestigungsvorrichtung nach Anspruch 5,
**dadurch gekennzeichnet,**
**dass** die Führungsaufnahme (49) mit einer Rastereinrichtung zur Relativpositionierung der Befestigungslasche versehen ist.

7. Befestigungsvorrichtung nach einem der vorangegangenen Ansprüche,
**dadurch gekennzeichnet**
**dass** zumindest die Anschlusseinrichtungsaufnahme zur Aufnahme der Befestigungseinrichtung an einer schwenkbar am Leuchtengehäuse angeordneten Schwenkbasis (26) angeordnet ist.

8. Befestigungsvorrichtung nach Anspruch 7,
**dadurch gekennzeichnet,**
**dass** das Leuchtengehäuse an seinem axialen Ende (67) mit zumindest jeweils einer Schwenkbasis (26) zum Verschwenken der Befestigungselemente in eine die äußeren Gehäuseabmessungen axial überragende Befestigungskonfiguration versehen ist.

9. Befestigungsvorrichtung nach Anspruch 8,
**dadurch gekennzeichnet,**
**dass** die Schwenkbasis mit einer Rastereinrichtung zur Relativpositionierung der Befestigungselemente versehen ist.

10. Befestigungsvorrichtung nach einem der vorangegangenen Ansprüche,
**dadurch gekennzeichnet,**
**dass** die Haftverbindungseinrichtung als Magnet (24) ausgebildet ist.
